# EUROPEAN PATENT SPECIFICATION

(11) **EP 2 081 336 B1**
(45) Date of publication and mention of the grant of the patent: **18.07.2012**
(21) Application number: 07817163.4
(22) Date of filing: 26.10.2007
(51) Int. Cl.: H04L 12/58, H04L 12/54

(54) **BUSINESS MESSAGE TRANSMISSION METHOD, SYSTEM AND APPARATUS**
VERFAHREN, SYSTEM UND VORRICHTUNG ZUR ÜBERTRAGUNG KOMMERZIELLER NACHRICHTEN
PROCÉDÉ DE TRANSMISSION DE MESSAGES COMMERCIAUX, SYSTÈME ET APPAREIL

(30) Priority: 27.10.2006 CN 200610063368
(43) Date of publication of application: 22.07.2009
(73) Proprietor: Huawei Technologies Co., Ltd., Longgang District, Shenzhen Guangdong 518129 (CN)
(72) Inventor: ZHANG, Ying, Guangdong 518129 (CN); JIANG, Lingli, Guangdong 518129 (CN); CHEN, Xiangrong, Guangdong 518129 (CN); ZHANG, Zhilong, Guangdong 518129 (CN); XIN, Wenwei, Guangdong 518129 (CN); FENG, Li, Guangdong 518129 (CN); DUAN, Lei, Guangdong 518129 (CN); ZHOU, Leru, Guangdong 518129 (CN); HUANG, Hui, Guangdong 518129 (CN); CHEN, Yin, Guangdong 518129 (CN); LIU, Li, Guangdong 518129 (CN); XU, Haomiao, Guangdong 518129 (CN); LIANG, Zhongqi, Guangdong 518129 (CN); LIU, Yiping, Guangdong 518129 (CN)
(74) Representative: Thun, Clemens
(86) International application number: PCT/CN2007/070972
(87) International publication number: WO 2008/052474

(56) References cited:
- CN-A- 1 553 686
- CN-A- 1 852 481
- CN-A- 1 980 411
- US-A1- 2003 003 932
- US-A1- 2006 199 597
- KUMAR K R ET AL: "Load balancing of services with server initiated connections" PERSONAL WIRELESS COMMUNICATIONS, 2005. ICPWC 2005. 2005 IEEE INTERNAT IONAL CONFERENCE ON NEW DELHI, INDIA JAN. 23-25, 2005, PISCATAWAY, NJ, USA,IEEE, 23 January 2005 (2005-01-23), pages 254-257, XP010798557 ISBN: 978-0-7803-8964-9

## Description

### FIELD OF THE INVENTION

The invention relates generally to the technical field of message transmission, and specifically to a method, a system and an apparatus for service message transmission.

### BACKGROUND

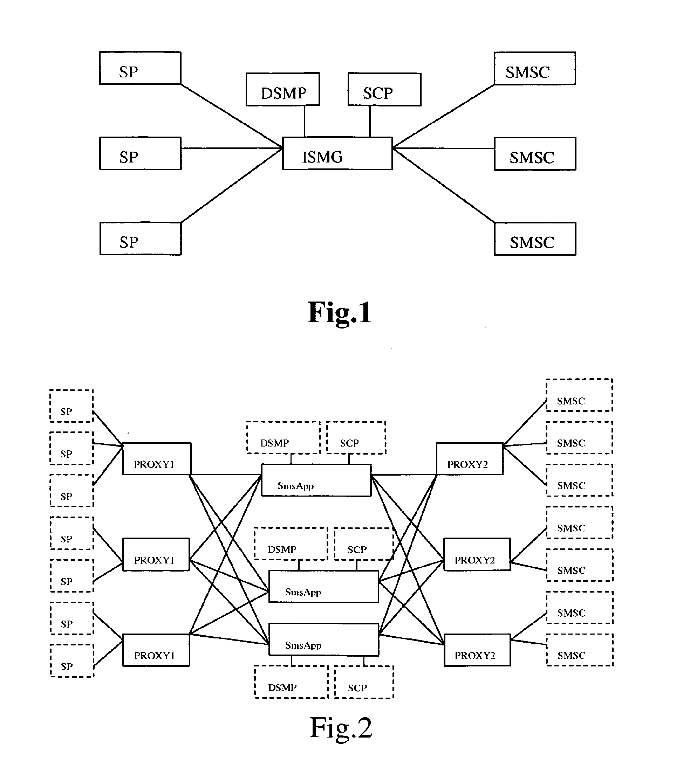

Services in networks are currently provided by Service Providers (SP) to handset users mainly by establishing a connection with a Short Message Service Center (SMSC) through an Internet Short Message Gateway (ISMG) and performing short message interactions with handset users through the SMSC. Fig. 1 is a diagram illustrating the networking of a single ISMG system in the prior art. As illustrated in Fig. 1, each SP establishes a connection with various SMSCs through an ISMG, and performs short message interactions with handsets through the SMSCs. In Fig. 1, the Data Service Management Platform (DSMP) and the Service Control Point (SCP) are the service processing entities connected with the ISMG.

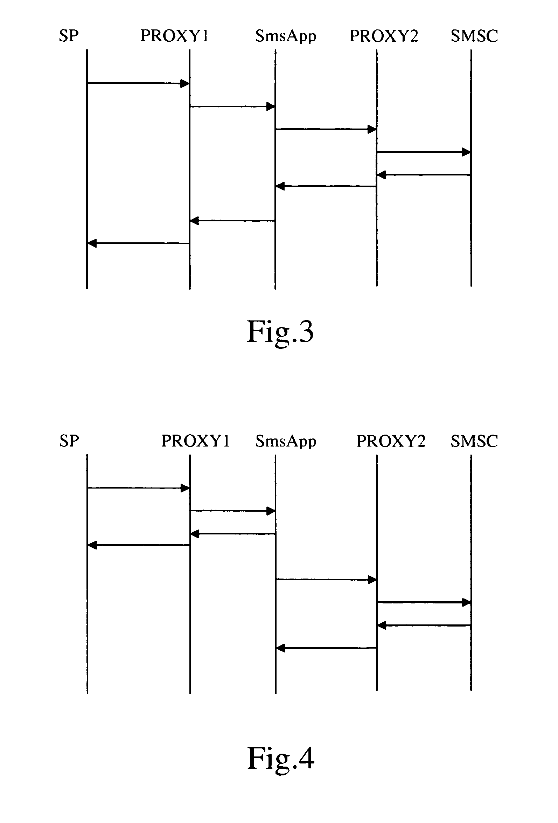

With the rapid increase of the number of SPs, however, the networking configuration with all SP access points concentrating at a single ISMG as illustrated in Fig. 1, has caused the access ability of the ISMG to become the bottle-neck of providing services. In the mean time, with the increase of service amount, the single ISMG system with has become overloaded.
D1 (US 2003/003932) discloses a messaging applications router (MAR, 1) and has router nodes (RNs) which interface with external short message service centers (SMSCs). A management node (MN, 12) and each router node maintain a DNS server, and in the routing nodes the DNS servers are linked with a routing agent (RA). Each router node binds to SMSCs transparently to the ESMEs depending upon current load distribution and configuration settings.
D2 (XP010798557) discloses a solution for balancing the load. In the solution, Balancing of the load in server-initiated connections can be done at the server itself, as server itself receives the requests. Hence server component mainly 'SERVER A', as depicted in Figure 3. 0, takes the request, validates it and stores it into the queues. Thus it acts as the load dispatcher by storing all the requests for use by processing component. 'SERVER B' acts as the request processor, each of them can pick the requests from the queue using simple load-balancing algorithms as in the case of client-Initiated connections.
D3 (CN-A-1553686) discloses a charging method for short message transmission system based on Internet. The charging method includes following steps: the internet short message gateway generates the call ticket after retransmitting the short message to the service supplier; the internet short message gateway sends the call ticket to the charging center at fixed quantities and fixed time; the charging center checks the data to settle accounts; the charging center generates the list of charges of users and the list of settlement.

### SUMMARY

A service message transmission method is provided, which improves the access ability and load capacity of the service message transmission system.

A service message transmission system is provided in the invention, which has a high access ability and a high load capacity.

A PROXY is provided, which improves the access ability and load capacity of the service message transmission system.

For the above described purpose, the present invention may be applied by the following technical schemes.

A method for service message transmission is disclosed, which includes the following steps:

a PROXY1 which accesses a Service Provider (SP) receives a service message sent to a terminal from the SP;

the PROXY1 routes the service message from the SP to a respective main processing procedure SmsApp according to caller number or called number segment;

the SmsApp processes the service message, and sends the service message processed to a PROXY2 which accesses a Short Message Service Center (SMSC) according to called routing;

the PROXY2 sends the service message having been processed to a respective SMSC according to a called number; and
routing, by the PROXY2, a status report message from the SMSC to the SmsApp according to called number when the PROXY1 routs the service message according to caller number, so that the service messages and the status report message belonging to the same SP are sent to the same SmsApp; or routing, by the PROXY2, the status report message from the SMSC to the SmsApp according to caller number segment when the PROXY1 routs the service message according to called number segment, so that the service messages and the status report message belonging to the same number segment are sent to the same SmsApp.

A service message transmission system is disclosed. The system includes at least two PROXYs and at least one SmsApp, wherein:

at least one PROXY accessing the SP is arranged at the SP side of the SmsApp and at least one PROXY accessing the SMSC is arranged at the SMSC side of the SmsApp; the at least one PROXY which accesses the SP is marked as PROXY1, and the at least one PROXY which accesses the SMSC is marked as PROXY2;

the PROXY1 which accesses the SP is adapted to receive a service message sent from the SP to a terminal, and to route the received service message to a corresponding SmsApp to have the service message processed according to caller number or called number segment; and

the SmsApp is connected with the PROXY1 which accesses the SP and the PROXY2 which accesses the SMSC; after a service message from the PROXY1 which accesses the SP has been processed, the service message is sent to the PROXY2 which accesses the SMSC;
the PROXY2 which accesses the SMSC is adapted to route the service message to a respective SMSC; and route a status report message from the SMSC to the SmsApp according to called number when the PROXY1 routs the service message according to caller number, so that the service messages and the status report message belonging to the same SP are sent to the same SmsApp, or route the status report message from the SMSC to the SmsApp according to caller number segment when the PROXY1 routs the service message according to called number segment, so that the service messages and the status report message belonging to the same number segment are sent to the same SmsApp.

It is obvious from the previous description that the access ability and load rapacity of the service message transmission system are improved, by integrating a plurality of PROXYs and the main processing procedure unit SmsApp.

### BRIEF DESCRIPTION OF THE DRAWINGS

Fig. 1 is a diagram illustrating the networking of a single ISMG system in the prior art;

Fig. 2 is a block diagram illustrating the structure of a service message transmission system in an embodiment of the invention;

Fig. 3 is a diagram illustrating the forwarding of MT messages in the service message transmission system illustrated in Fig. 2 when it is operating in a synchronous mode;

Fig. 4 is a diagram illustrating the forwarding of MT messages in the service message transmission system illustrated in Fig. 2 when it is operating in an asynchronous mode; and

Fig. 5 is a block diagram illustrating the structure of a PROXY in an embodiment of the invention.

### DETAILED DESCRIPTION

The invention will be described in detail by referring to figures and embodiments, in order to make the technical solutions and the advantages of the invention more obvious.

For the convenience of description, the technical terms used in the embodiments of the invention are described in the following:

TON: Type of Number;

NPI: Numeric Plan Indicator ;

PID: Protocol ID;

MT: Message sent to a handset by an SP; and

MO: Message sent to an SP by a handset.

In addressing the bottle-neck problem of the access ability in the current single ISMG system, a scheme of accessing through multiple PROXYs is provided in an embodiment of the invention. A PROXY is a simplified ISMG, the major functions of which include: number conversion, routing, forwarding messages to the main processing procedure, etc., which will be described later in more detail. For the situation that the access ability of single ISMGs at some SPs are still far from enough even when they are configured with existing top grade hardware, loads are flexibly distributed in the service layer to a plurality of different main processing procedures in the scheme of the embodiments, which can improve the access ability significantly over the prior technology. In the scheme, for the convenience of description, the main processing procedure is called an SmsApp hereinafter. The SmsApp provides a function similar to a gateway, and improves the access ability by interacting with the PROXY, in order to balance the loads, and to provide the function of number conversion. The PROXY and the SmsApp cooperate to constitute a group.

Fig. 2 is a block diagram illustrating the structure of a service message transmission system in an embodiment of the invention. Referring to Fig. 2, the service message transmission system includes one or more SPs and one or more SMSCs. The system further includes at least two PROXYs and at least one SmsApp, in which:

At least one PROXY is arranged at each of the SPs and at least one other PROXY is arranged at each of the SMSCs. For the convenience of description, the PROXYs which access the SPs are marked as PROXY1s, and the PROXY which access SMSCs are marked as PROXY2s.

The PROXY1s which access SPs are adapted to receive service messages sent from the SPs to terminals, and to route the received service messages and to send the service messages to corresponding SmsApps to have the service messages processed. At least one SmsApp account is established at the PROXY1 which accesses an SP. The corresponding SmsApp is one which corresponds to the SmsApp account established on the PROXY1.

In an embodiment, the processing to the service messages by the SmsApp is similar to the processing to the received messages made by the ISMG (see the block diagram in Fig. 1), the description of which will not be repeated here.

The SmsApps are connected with the PROXY1s which access the SPs and the PROXY2s which access the SMSCs, respectively. After the service messages from the PROXY1s which access the SPs are processed by the SmsApps, the service messages are sent to the PROXY2s which access the SMSCs. Then the PROXY2s which access the SMSCs route the service messages to the corresponding SMSCs.

The routing of the received service messages by the PROXY1s which access SPs includes one of the following two ways.

One way is that the PROXY1s route the received service messages according to SP access codes, i.e., Caller IDs, transmitting the service messages from the same SP to the same SmsApp to have the service messages processed.

Another way is that the PROXY1s route the received service messages according to called numbers, usually according to number segments which the called IDs belong to, and transmit the service messages for the same number segment to the same SmsApp to have the service messages processed.

In the above ways, the service messages sent from SPs which belong to an SP number segment, or the service messages sent to handsets which belong to a handset number segment can be processed in a same SmsApp by routing according to caller ID or called ID , which makes status reports match each other.

Examples are described below to clarify the technological scheme adopted by an embodiment of the invention.

1. Routing scheme

Each message has a source address and a destination address. The source address is the caller address, and the destination address is the called address. The ISMGs route the messages according to the called addresses generally. The routing scheme in the embodiment of the invention may be a joint routing according to both caller routing and called routing, in which, the routing parameters include a caller ID, a called ID, the TON of the caller address, the NPI of the caller address, the TON of the called address, the NPI and PID of the called address. The specific routing may be set according to both the caller parameters and the called parameters, or may be set according to the caller parameters, or may be set according to the called parameters, and each of the routing parameters supports wildcard characters.

For example, it is assumed that the access code of SP(A) is 8888, the number of the handset of a user (B) is 13600000000, and A sends a message to B. The source (caller) address is 8888, the destination (called) address is 13600000000. On the other hand, if B sends a message to A, the source (caller) address is 13600000000, and the destination (called) address is 8888.

In another embodiment, loads are distributed, by the service message transmission system illustrated in Fig. 2, during the routing scheme according to caller addresses and called addresses. Two specific manners of loads distribution are shown as follows:

(1) Loads are distributed according to SP access codes

MT messages are routed by the PROXY1 which accesses SPs according to caller numbers, and messages are routed by the PROXY2 which accesses SMSCs according to called numbers. In other words, MO messages and status report messages are routed by the PROXY2 according to called numbers, sending the service messages which belong to the same SP to the same SmsApp for them to be processed there. PROXY2s have a function of number conversion. Therefore the messages or returned status reports sent by the SMSCs are sent to the correct SmsApps after number conversion. Number conversions are performed for different purposes. For example, some number conversions are performed for adding or removing country codes. Some number conversions are performed for intercommunication between operators, such as, short messages sent from China Mobile to China Telecom should be added with 106. Some number conversions are performed to convert access codes of SPs into handset numbers. They are all numbers after and before conversions, such as handset numbers or SP access codes. It is possible that they are converted into each other, depending on the intercommunication configuration of specific operator's networks. Service messages such as MT and status report messages sent from the same SP are routed to the same SmsApp for them to be processed there. The service messages after being processed by the SmsApp are routed according to called numbers to the correct PROXY2s, and are sent out according to called numbers. In the example described above, the process may be described briefly as: SP(A) - PROXY1 - SmsApp 1 - PROXY2 - SMSC (the SMSC which handset B belongs to). In other words, it is set on PROXY1s that the messages of caller number 8888 are routed to SmsAppl, and it is set on PROXY2s that the messages for called number 8888 are routed to SmsApp1. In this way, the service messages associated with SP(A) are sent to SmsApp1 to be processed there.

(2) Loads are distributed according to number segments of the handsets of users

MT messages are routed by PROXY1s which access SPs according to called numbers, and MO messages and status report messages are routed by PROXY2s which access SMSCs according to caller numbers. Service messages for the users belonging to the same number segment are sent to the same SmsApp to be processed there. The messages which have been processed at SmsApps are routed to the correct PROXYs according to the called numbers, and are sent out according to the called numbers. In the example described above, the process may be described briefly as: SP(A) - PROXY 1 - SmsApp2 - PROXY2 - SMSC (the SMSC which handset B belongs to). In a specific example, it is set on PROXYIs S that the messages with called numbers belonging to the number segment 136 are routed to SmsApp2, and it is set on PROXY2s that the messages with called numbers belonging to the number segment 136 are routed to SmsApp2. In this way, the services associated with the number segment 136 are sent to SmsApp2 for them to be processed there.

By the processing described above, short messages can be distributed to different SmsApps according to number segments to be processed there, and service processing can be shared by multiple SmsApps.

2. Description about details of the preferable exemplary embodiment

(1) Accounts are backed-up for disaster recovery: SmsApps are backed-up by backing-up accounts on PROXYs. For example, in the service message transmission system illustrated in Fig. 2, accounts SmsApp1 and SmsApp2 are established on PROXY1, and routes to SmsApp1 and SmsApp2 are established in the two accounts respectively. The backup account of SmsApp1 is set to be SmsApp2. Therefore, when SmsApp1 fails, services on SmsApp1 are all transferred to SmsApp2 automatically. Similarly, backing-up of PROXYs may also be realized on SmsApps using associated accounts. With the account backup function on PROXYs and SmsApps, the function of disaster recovery of the whole group may be realized.

(2) It is determined by SmsApps whether the whole group illustrated in Fig. 2 is a synchronous or an asynchronous one. In other words, the whole system is a synchronous one if the SmsApps are set to be synchronous, and the whole system is an asynchronous one if the SmsApps are set to be asynchronous. The PROXYs are all synchronous. Different operators have different requirements about whether the whole system should be set to be synchronous or asynchronous, and the different requirements may be satisfied by configuring SmsApps in the embodiment of the invention.

Fig. 3 is a diagram illustrating the forwarding of MT messages in the service message transmission system illustrated in Fig. 2 when it is operating in a synchronous mode. As illustrated in Fig. 3, the process by which an SP distributes messages to gateways in the form of a group is described below.

Messages are sent by an SP to a PROXY1 which accesses the SP;

Messages are sent by the PROXY1 which accesses the SP to corresponding SmsApp;

Messages are sent by the corresponding SmsApps to a PROXY2 which accesses a corresponding SMSC;

Messages are forwarded by the PROXY2 which accesses the SMSC to the corresponding SMSC;

Replies are returned by the SMSC to the PROXY2 which accesses the SMSC;

The replies are forwarded by the PROXY2 which accesses the SMSC to the corresponding SmsApps;

The replies are forwarded by the SmsApps to the PROXY1 which accesses the SP; and

The replies are forwarded by the PROXY 1 which accesses the SP to the SP.

The advantage of this process is that the status of replying by the SMSCs are fed back directly to SPs, while the time periods during which SPs wait for replies are relatively long.

Fig. 4 is a diagram illustrating the forwarding of MT messages in the service message transmission system illustrated in Fig. 2 when it is operating in an asynchronous mode. As illustrated in Fig. 4, the process by which SPs distribute messages to gateways in the form of a group is described below.

Messages are sent by an SPs to PROXY 1 which accesses the SP;

Messages are sent by the PROXY which accesses the SP to corresponding SmsApps;

Replies are forwarded by SmsApps to the PROXY1 which accesses the SP;

The replies are forwarded by the PROXY1 which accesses the SP to the SP;

Messages are sent by corresponding SmsApps to a PROXY2 which a corresponding SMSC accesses;

The messages are forwarded by the PROXY2 which accesses the SMSC to the corresponding SMSC;

Replies are returned by the SMSC to the PROXY2 which accesses the SMSC; and

Replies are forwarded by the PROXY2 which accesses the SMSC to corresponding SmsApps.

The disadvantage of this process is that the status of replying by lower level net elements, i.e., the SMSCs, can not be fed back directly to SPs, while the advantage is that the time periods during which SPs wait for replies are relatively short.

(3) In the service message transmission system illustrated in Fig. 2, all the SmsApps and PROXYs may share one database or several databases, and they may each use their own databases. The databases are adapted to store account routing data and waiting entities which are over time in memories. The waiting entities are messages waiting for status reports which are stored in memory or database after messages are sent by gateways to SMSCs or lower level gateways. Messages can only be charged for only after status reports are received which match the entities successfully and the status reports show that the messages have been distributed normally.

(4) Normal bills are all output from the machine where the SmsApps are in. A PROXY may set its own bill processing process, to process abnormal bills when transmission failure occurs.

(5) The account routings setup on SmsApps and PROXYs are managed by the same network manager. In this way, distribution management of account routing is facilitated. When abnormal status occurs in a PROXY or SmsApp, account routing data may be synchronized to another PROXY or SmsApp.

Based on the embodiments described above, a block diagram of a PROXY of the invention is described next.

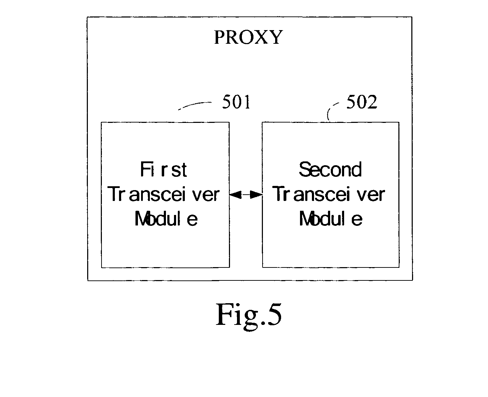

Fig. 5 is a block diagram illustrating the structure of a PROXY in an embodiment of the invention. As illustrated in Fig. 5, the PROXY includes a first transceiver module 501 and a second transceiver module 502.

In Fig. 5, the first transceiver module 501 is adapted to send received service messages to the second transceiver module 502, and to send service messages from the second transceiver module 502 according to the called numbers in the service messages.

The second transceiver module 502 is adapted to send service messages from SmsApps to the first transceiver module 501, and to send service messages from the first transceiver module 501 to corresponding SmsApps according to predetermined rules.

In Fig. 5, the first transceiver 501 sends received service messages to the second transceiver module 502, and sends service messages from the second transceiver module 502 according to the called addresses in the service messages. The above steps may include the following steps: the first transceiver module 501 sends service messages from SPs to the second transceiver module 502, and sends service messages from the second transceiver module 502 according to the called addresses in the service messages to corresponding SPs; or, the first transceiver module 501 sends service messages from SMSCs to the second transceiver module 502, and sends service messages from the second transceiver module 502 to corresponding SMSCs according to the called addresses in the service messages.

In Fig. 5, the step that the second transceiver module 502 routes service messages from the first transceiver module 501 to corresponding SmsApps according to predetermined rules may include: the second transceiver module 502 sends service messages from the first transceiver module 501 to corresponding SmsApps according to caller addresses or called addresses.

By adding PROXYs in the embodiments of the invention, access ability of the service message transmission system is improved. The access ability of existing single ISMG depends on the physical configuration and operating system of the ISMG, limiting access ability of gateways. Assuming the upper limit of the access ability of a single IMSG is 1100 interfaces, i.e., the maximum number of interfaces established under normal service condition, the number of interfaces left for SPs is usually 800 to 900, except the interfaces needed by SMSCs and DSMPs, SCPs to establish connections with gateways, depending on actual networking conditions. By networking in the group mode provided in the invention, the number of interfaces which a single PROXY may provide for SPs may reach 800 to 900 or even up to one thousand. The number of interfaces which the whole system may provide for SPs may increase with the increase of the numbers of PROXYs and SmsApps. Load sharing and disaster recovery may also be realized between multiple SmsApps.

In general, the access ability and message processing ability of ISMG systems may be greatly improved with the invention, and they have a strong ability for disaster recovery. The whole system has a extremely strong extendablility, the number of SmsApps and PROXYs may be adjusted with the increase of service amount and increase of the number of SPs.

The embodiments described above are only preferred embodiments of the invention, and they are not intended to limit the scope of the invention. All modifications, equivalents, improvements within the principle of the invention are intended to be included in the scope of the invention.

## Claims

1. A method for service message transmission, comprising:
receiving, by a first proxy, PROXY1, which accesses a Service Provider, SP, a service message sent to a terminal by the SP;
routing, by the PROXY1, the service message from the SP to a respective main processing procedure, SmsApp, according to caller number or called number segment;
processing, by the SmsApp, the service message, and sending the service message having been processed to a second proxy, PROXY2, which accesses a Short Message Service Center, SMSC, according to called routing;
sending, by the PROXY2, the service message having been processed to a respective SMSC according to a called number; and
routing, by the PROXY2, a status report message from the SMSC to the SmsApp according to called number when the PROXY1 routes the service message according to caller number, so that the service messages and the status report message belonging to the same SP are sent to the same SmsApp; or routing, by the PROXY2, the status report message from the SMSC to the SmsApp according to caller number segment when the PROXY1 routes the service message according to called number segment, so that the service messages and the status report message belonging to the same number segment are sent to the same SmsApp.

2. The method for service message transmission according to claim 1, further comprising:
establishing an SmsApp account on the PROXY1 before the service message to be sent by the SP to the terminal is received by the PROXY1; and
routing, by the PROXY1, the service message, with the service message from the SP being sent to an SmsApp corresponding to the SmsApp account established on the PROXY1.

3. The method for service message transmission according to claim 2, further comprising:
establishing a backup SmsApp account for each SmsApp account; and
enabling an SmsApp of a backup SmsApp account to process and send service messages when the SmsApp of the corresponding SmsApp account fails.

4. The method for service message transmission according to any one of claims 1 to 3, further comprising:
setting the number of PROXY1s which access SPs to be more than 2;
routing service messages from a different SP to a different PROXY1; and
allowing each PROXY1 to access more than one SP.

5. The method for service message transmission according to any one of claims 1 to 3, further comprising:
setting the number of PROXY2s which access SMSCs to be more than 2;
routing service messages for a different SMSC to a different PROXY2; and
allowing each PROXY2 to access more than one SMSC.

6. The method for service message transmission according to any one of claims 1 to 3, wherein:
the PROXY1s and PROXY2s are configured to operate in a synchronous mode; and
the SmsApp is configured to operate in an asynchronous mode or a synchronous mode.

7. The method for service message transmission according to any one of claims 1 to 3, wherein:
more than one database is shared or different databases are used respectively by the PROXY1s, PROXY2s and SmsApps.

8. The method for service message transmission according to any one of claims 1 to 3, further comprising:
storing and providing normal bills by the SmsApp;
setting independent bill processing procedures in the PROXYIs and PROXY2s; and
storing and providing abnormal bills when transmission fails.

9. The method for service message transmission according to any one of claims 1 to 3, wherein:
account routings of PROXY1s, PROXY2s and SmsApps are assigned and managed by the same network manager.

10. A service message transmission system comprising at least two PROXYs and at least one main processing procedure, SmsApp, wherein:
at least one PROXY accessing the SP is arranged at the SP side of the SmsApp, and at least one PROXY accessing the SMSC is arranged at the SMSC side of the SmsApp, the at least one PROXY which accesses the SP is marked as PROXY1, and the at least one PROXY which accesses the SMSC is marked as PROXY2;
the PROXY1 which accesses the SP is adapted to receive a service message sent from the SP to a terminal, and to route the received service message to a corresponding SmsApp to have the service message processed according to caller number or called number segment; and
the SmsApp is connected with the PROXY1 which accesses the SP and the PROXY2 which accesses the SMSC; after a service message from the PROXY1 which accesses the SP has been processed, the service message is sent to the PROXY2 which accesses the SMSC;
the PROXY2 which accesses the SMSC is adapted to route the service message to a respective SMSC; and route a status report message from the SMSC to the SmsApp according to called number when the PROXY1 routes the service message according to caller number, so that the service messages and the status report message belonging to the same SP are sent to the same SmsApp, or route the status report message from the SMSC to the SmsApp according to caller number segment when the PROXY1 routes the service message according to called number segment, so that the service messages and the status report message belonging to the same number segment are sent to the same SmsApp.

11. The service message transmission system according to claim 10, wherein:
the PROXY1 which accesses the SP is adapted to establish at least one SmsApp account, and to send the service message to an SmsApp corresponding to the established SmsApp account for the service message to be processed.

12. The service message transmission system according to anyone of claims 10 to 11, wherein:
the PROXY1 and PROXY2 are adapted also for number conversion, and to route the message from the SP or the SMSC to the SmsApp corresponding to the number converted.

## Patentansprüche

1. Verfahren zur Dienstnachrichtübertragung, das Folgendes umfasst:
Empfangen durch einen ersten Proxy, PROXY1, der auf einen Dienstanbieter, SP, zugreift, einer Dienstnachricht, die durch den SP zu einem Endgerät gesendet wird;
Lenken durch den PROXY1 der Dienstnachricht von dem SP zu einer entsprechenden Hauptverarbeitungsprozedur, SmsApp, in Übereinstimmung mit einem Segment einer anrufenden Nummer oder einer angerufenen Nummer;
Verarbeiten durch die SmsApp der Dienstnachricht und Senden der Dienstnachricht,
die verarbeitet worden ist, zu einem zweiten Proxy, PROXY2, der auf eine Kurznachrichtendienstzentrale, SMSC, zugreift, in Übereinstimmung mit der Anruflenkung;
Senden durch den PROXY2 der Dienstnachricht, die verarbeitet worden ist, zu einer entsprechenden SMSC in Übereinstimmung mit einer angerufenen Nummer; und
Lenken durch den PROXY2 einer Statusberichtsnachricht von der SMSC zu der SmsApp in Übereinstimmung mit einer angerufenen Nummer, wenn der PROXY1 die Dienstnachricht in Übereinstimmung mit einer anrufenden Nummer lenkt, so dass die Dienstnachrichten und die Statusberichtsnachricht, die zu demselben SP gehören,
zu derselben SmsApp gesendet werden; oder Lenken durch den PROXY2 der Statusberichtsnachricht von der SMSC zu der SmsApp in Übereinstimmung mit einem Segment einer anrufenden Nummer, wenn der PROXY1 die Dienstnachricht in Übereinstimmung mit einem Segment einer angerufenen Nummer lenkt, so dass die Dienstnachrichten und die Statusberichtsnachricht, die zu demselben Nummernsegment gehören, zu derselben SmsApp gesendet werden.

2. Verfahren zur Dienstnachrichtübertragung nach Anspruch 1, das ferner Folgendes umfasst:
Erstellen eines SmsApp-Kontos bei dem PROXY1, bevor die Dienstnachricht, die durch den SP zu dem Endgerät gesendet werden soll, von dem PROXY1 empfangen wird; und
Lenken durch den PROXY1 der Dienstnachricht, wobei die Dienstnachricht von dem SP zu einer SmsApp in Übereinstimmung mit dem bei dem PROXY1 erstellten SmsApp-Konto gesendet wird.

3. Verfahren zur Dienstnachrichtübertragung nach Anspruch 2, das ferner Folgendes umfasst:
Erstellen eines Sicherungs-SmsApp-Kontos für jedes SmsApp-Konto; und
Freigeben einer SmsApp eines Sicherungs-SmsApp-Kontos, um Dienstnachrichten zu verarbeiten und zu senden, wenn die SmsApp des entsprechenden SmsApp-Kontos ausfällt.

4. Verfahren zur Dienstnachrichtübertragung nach einem der Ansprüche 1 bis 3, das ferner Folgendes umfasst:
Einstellen der Anzahl von PROXY1, die auf SP zugreifen, auf größer als 2;
Lenken von Dienstnachrichten von einem anderen SP zu einem anderen PROXY1; und
Zulassen, dass jeder PROXY1 auf mehr als einen SP zugreift.

5. Verfahren zur Dienstnachrichtübertragung nach einem der Ansprüche 1 bis 3, das ferner Folgendes umfasst:
Einstellen der Anzahl von PROXY2, die auf SMSC zugreifen, auf größer als 2;
Lenken von Dienstnachrichten für eine andere SMSC zu einem anderen PROXY2; und
Zulassen, dass jeder PROXY2 auf mehr als eine SMSC zugreift.

6. Verfahren zur Dienstnachrichtübertragung nach einem der Ansprüche 1 bis 3, wobei:
die PROXY und PROXY2 dahingehend konfiguriert sind, in einer synchronen Betriebsart zu arbeiten; und
die SmsApp dahingehend konfiguriert ist, in einer asynchronen Betriebsart oder in einer synchronen Betriebsart zu arbeiten.

7. Verfahren zur Dienstnachrichtübertragung nach einem der Ansprüche 1 bis 3, wobei:
durch die PROXY1, PROXY2 bzw. SmsApp mehr als eine Datenbank gemeinsam genutzt oder verschiedene Datenbanken genutzt werden.

8. Verfahren zur Dienstnachrichtübertragung nach einem der Ansprüche 1 bis 3, das ferner Folgendes umfasst:
Speichern und Bereitstellen normaler Rechnungen durch die SmsApp;
Einstellen unabhängiger Rechnungsverarbeitungsprozeduren in den PROXY1 und PROXY2; und
Speichern und Bereitstellen anomaler Rechnungen, wenn die Übertragung ausfällt.

9. Verfahren zur Dienstnachrichtübertragung nach einem der Ansprüche 1 bis 3, wobei:
Kontolenkungen von PROXY1, PROXY2 und SmsApp durch denselben Netzmanager zugewiesen und gemanagt werden.

10. Dienstnachricht-Übertragungssystem, das wenigstens zwei PROXY und wenigstens eine Hauptverarbeitungsprozedur, SmsApp, umfasst, wobei:
wenigstens ein PROXY, der auf den SP zugreift, auf der SP-Seite der SmsApp angeordnet ist und wenigstens ein PROXY, der auf die SMSC zugreift, auf der SMSC-Seite der SmsApp angeordnet ist, wobei der wenigstens eine PROXY, der auf den SP zugreift, als PROXY1 bezeichnet wird und der wenigstens eine PROXY, der auf die SMSC zugreift, als PROXY2 bezeichnet wird;
wobei der PROXY1, der auf den SP zugreift, dazu ausgelegt ist, eine von dem SP zu einem Endgerät gesendete Dienstnachricht zu empfangen und die empfangene Dienstnachricht zu einer entsprechenden SmsApp zu lenken, damit die Dienstnachricht in Übereinstimmung mit einem Segment einer anrufenden Nummer oder einer angerufenen Nummer verarbeitet wird; und
die SmsApp mit dem PROXY1, der auf den SP zugreift, und mit dem PROXY2, der auf die SMSC zugreift, verbunden ist; eine Dienstnachricht, nachdem sie von dem PROXY1, der auf den SP zugreift, verarbeitet worden ist, zu dem PROXY2, der auf die SMSC zugreift, gesendet wird;
wobei der PROXY2, der auf die SMSC zugreift, dazu ausgelegt ist, die Dienstnachricht zu einer jeweiligen SMSC zu lenken; und eine Statusberichtsnachricht von der SMSC zu der SmsApp in Übereinstimmung mit einer angerufenen Nummer zu lenken, wenn der PROXY1 die Dienstnachricht in Übereinstimmung mit einer anrufenden Nummer lenkt, so dass die Dienstnachrichten und die Statusberichtsnachricht, die zu demselben SP gehören, zu derselben SmsApp gesendet werden, oder die Statusberichtsnachricht von der SMSC zu der SmsApp in Übereinstimmung mit einem Segment einer anrufenden Nummer zu lenken, wenn der PROXY1 die Dienstnachricht in Übereinstimmung mit einem Segment einer angerufenen Nummer lenkt, so dass die Dienstnachrichten und die Statusberichtsnachricht, die zu demselben Nummernsegment gehören, zu derselben SmsApp gesendet werden.

11. Dienstnachricht-Übertragungssystem nach Anspruch 10, wobei:
der PROXY1, der auf den SP zugreift, dazu ausgelegt ist, wenigstens ein SmsApp-Konto zu erstellen und die Dienstnachricht zu einer SmsApp in Übereinstimmung mit dem erstellten SmsApp-Konto für die zu verarbeitende Dienstnachricht zu senden.

12. Dienstnachricht-Übertragungssystem nach einem der Ansprüche 10 bis 11, wobei:
der PROXY1 und PROXY2 außerdem für eine Nummernumsetzung ausgelegt sind und dazu ausgelegt sind, die Nachricht von dem SP oder der SMSC zu der SmsApp in Übereinstimmung mit der umgesetzten Nummer zu lenken.

## Revendications

1. Procédé de transmission de message de service, comprenant :
la réception, par un premier mandataire, PROXY1, qui sollicite un Fournisseur de Services, SP, d'un message de service envoyé à un terminal par le SP ;
le routage, par le PROXY1, du message de service depuis le SP jusqu'à une procédure de traitement principale respective, SmsApp, en fonction d'un numéro d'appelant ou d'un segment de numéro appelé ;
le traitement, par la SmsApp, du message de service, et l'envoi du message de service traité à un second mandataire, PROXY2, qui sollicite un Centre de Service de Messages Courts, SMSC, en fonction du routage appelé ;
l'envoi, par le PROXY2, du message de service traité à un SMSC respectif en fonction d'un numéro appelé ; et
le routage, par le PROXY2, d'un message de rapport d'état depuis le SMSC jusqu'à la SmsApp en fonction du numéro appelé quand le PROXY1 route le message de service en fonction du numéro d'appelant, de telle sorte que les messages de service et le message de rapport d'état relatifs au même SP soient envoyés à la même SmsApp ; ou le routage, par le PROXY2, du message de rapport d'état depuis le SMSC jusqu'à la SmsApp en fonction du segment de numéro d'appelant quand le PROXY1 route le message de service en fonction du segment de numéro appelé, de telle sorte que les messages de service et le message de rapport d'état relatifs au même segment de numéro soient envoyés à la même SmsApp.

2. Procédé de transmission de message de service selon la revendication 1, comprenant en outre :
l'établissement d'un compte SmsApp sur le PROXY1 avant que le message de service devant être envoyé par le SP au terminal ne soit reçu par le PROXY1 ; et
le routage, par le PROXY1, du message de service, le message de service provenant du SP étant envoyé à une SmsApp correspondant au compte SmsApp établi sur le PROXY 1.

3. Procédé de transmission de message de service selon la revendication 2, comprenant en outre :
l'établissement d'un compte SmsApp de secours pour chaque compte SmsApp ; et
l'activation d'une SmsApp d'un compte SmsApp de secours afin de traiter et
d'envoyer des messages de service quand la SmsApp du compte SmsApp correspondant échoue.

4. Procédé de transmission de message de service selon l'une quelconque des revendications 1 à 3, comprenant en outre :
l'établissement à plus de 2 du nombre de PROXY 1 qui sollicitent les SP ;
le routage de messages de service depuis un SP différent jusqu'à un PROXY1 différent ; et
l'autorisation à chaque PROXY1 de solliciter plus d'un SP.

5. Procédé de transmission de message de service selon l'une quelconque des revendications 1 à 3, comprenant en outre :
l'établissement à plus de 2 du nombre de PROXY2 qui sollicitent les SMSC ;
le routage de messages de service depuis un SMSC différent jusqu'à un PROXY2 différent ; et
l'autorisation à chaque PROXY2 de solliciter plus d'un SMSC.

6. Procédé de transmission de message de service selon l'une quelconque des revendications 1 à 3, dans lequel :
les PROXY1 et les PROXY2 sont configurés pour fonctionner en mode synchrone ; et
la SmsApp est configurée pour fonctionner en mode asynchrone ou en mode synchrone.

7. Procédé de transmission de message de service selon l'une quelconque des revendications 1 à 3, dans lequel :
plus d'une base de données est partagée ou différentes bases de données sont utilisées respectivement par les PROXY1, les PROXY2 et les SmsApp.

8. Procédé de transmission de message de service selon l'une quelconque des revendications 1 à 3, comprenant en outre :
la mémorisation et la fourniture de factures normales par la SmsApp ;
l'établissement de procédures indépendantes de traitement de factures dans les PROXY1 et les PROXY2 ; et
la mémorisation et la fourniture de factures anormales quand la transmission échoue.

9. Procédé de transmission de message de service selon l'une quelconque des revendications 1 à 3, dans lequel :
des routages de compte des PROXY1, des PROXY2 et des SmsApp sont assignés et gérés par le même gestionnaire de réseau.

10. Système de transmission de message de service, comprenant au moins deux PROXY et au moins une procédure de traitement principale, SmsApp, dans lequel :
au moins un PROXY qui sollicite le SP est disposé côté SP de la SmsApp, et au moins un PROXY qui sollicite le SMSC est disposé côté SMSC de la SmsApp, l'au moins un PROXY qui sollicite le SP est désigné comme PROXY1, et l'au moins un PROXY qui sollicite le SMSC est désigné comme PROXY2 ;
le PROXY1 qui sollicite le SP est adapté pour recevoir un message de service envoyé par le SP à un terminal, et router le message de service reçu à une SmsApp correspondante pour que le message de service soit traité en fonction d'un numéro d'appelant ou d'un segment de numéro appelé ; et
la SmsApp est connectée au PROXY1 qui sollicite le SP et au PROXY2 qui sollicite le SMSC ; après qu'un message de service depuis le PROXY1 qui sollicite le SP a été traité, le message de service est envoyé au PROXY2 qui sollicite le SMSC ;
le PROXY2 qui sollicite le SMSC est adapté pour router le message de service jusqu'à un SMSC respectif ; et router un message de rapport d'état depuis le SMSC jusqu'à la SmsApp en fonction du numéro appelé quand le PROXY1 route le message de service en fonction du numéro d'appelant, de telle sorte que les messages de service et le message de rapport d'état relatifs au même SP soient envoyés à la même SmsApp ; ou pour router le message de rapport d'état depuis le SMSC jusqu'à la SmsApp en fonction du segment de numéro d'appelant quand le PROXY1 route le message de service en fonction du segment de numéro appelé, de telle sorte que les messages de service et le message de rapport d'état appartenant au même segment de numéro soient envoyés à la même SmsApp.

11. Système de transmission de message de service selon la revendication 1 0, dans lequel :
le PROXY1 qui sollicite le SP est adapté pour établir au moins un compte SmsApp et envoyer le message de service à une SmsApp correspondant au compte SmsApp établi pour le message de service à traiter.

12. Système de transmission de message de service selon l'une quelconque des revendications 10 et 11, dans lequel :
le PROXY1 et le PROXY2 sont adaptés également pour une conversion de numéros et pour router le message depuis le SP ou le SMSC jusqu'à la SmsApp correspondant au numéro converti.
